# EUROPÄISCHE PATENTANMELDUNG

(11) **EP 1 630 810 A2**
(43) Veröffentlichungstag der Anmeldung: **01.03.2006**
(21) Anmeldenummer: 05017613.0
(22) Anmeldetag: 12.08.2005
(51) Int. Cl.: G11B 27/034

(54) **Verfahren zum Schneiden eines digitalen Films unter Verwendung einer elektronischen Datenverarbeitungsvorrichtung und Datenverarbeitungsvorrichtung zur Durchführung des Verfahrens**

(30) Priorität: 26.08.2004 DE 102004041390
(71) Anmelder: Fujitsu Siemens Computers GmbH, 80807 München (DE)
(72) Erfinder: Kleine, Joachim, 86159 Augsburg (DE)
(74) Vertreter: Epping - Hermann - Fischer

(57) **Zusammenfassung**

Beschrieben wird ein Verfahren zum Schneiden eines digitalen Films (1) unter Verwendung einer elektronischen Datenverarbeitungsvorrichtung (20) mit den Schritten: Setzen einer ersten Schnittmarkierung (5) zur Kennzeichnung des Beginns eines auszuschneidenden Filmabschnitts (3,4), Setzen einer zweiten Schnittmarkierung (6) zur Kennzeichnung des Endes eines auszuschneidenden Filmabschnitts (3,4) und Ausschneiden des Filmabschnitts zwischen der ersten und der zweiten Schnittmarkierung (5,6). Das Verfahren ist dadurch gekennzeichnet, dass die erste Schnittmarkierung (5) automatisch an dem Anfang des Films (1) gesetzt wird, wenn zuerst die zweite Schnittmarkierung (6) gesetzt wird, oder automatisch an dem Ende des Films (1) gesetzt wird, wenn zuerst die erste Schnittmarkierung (5) gesetzt wird.

## Beschreibung

Die Erfindung betrifft ein Verfahren zum Schneiden eines digitalen Films unter Verwendung einer elektronischen Datenverarbeitungsvorrichtung mit den Schritten:
- Setzen einer ersten Schnittmarkierung zur Kennzeichnung des Beginns eines auszuschneidenden Filmabschnitts,
- Setzen einer zweiten Schnittmarkierung und zur Kennzeichnung des Endes eines auszuschneidenden Filmabschnitts und
- Ausschneiden eines Filmabschnitts zwischen der ersten und der zweiten Schnittmarkierung.

Zudem betrifft die Erfindung eines Schnittvorrichtung mit einem Speicher, in dem ein digitaler Film speicherbar ist, einer Wiedergabeeinheit zur Wiedergabe eines in dem Speicher abgelegten Films, einer Bedieneinheit zur Eingabe von Steuerbefehlen für die Schnittvorrichtung und einer Steuereinheit zur Entgegennahme von Steuerbefehlen von der Bedieneinheit.

Filme liegen immer häufiger in digitaler Form vor. Die Bearbeitung von Filmen in digitaler Form ist dadurch möglich geworden, dass digitale Speichermedien mit einer großen Aufnahmekapazität zu verhältnismäßig günstigen Preisen verfügbar sind. Außerdem sind Mikroprozessoren verfügbar, deren Leistungsfähigkeit zur Verarbeitung großer Datenmengen, wie sie bei Filmen auftreten, in Echtzeit ausreicht.

Bei in digitaler Form vorliegenden Filmen besteht, wie auch bei in analoger Form vorliegenden Filmen, das Problem, dass oft Filmabschnitte aufgezeichnet werden, die eigentlich unerwünscht sind. Bei privaten Videoaufnahmen beispielsweise sind oft nur wenige Szenen dazu geeignet, für später aufgehoben zu werden. Bei der Aufzeichnung von im Fernsehen ausgestrahlten Filmen wird oftmals eine auch Timer genannte Zeitschaltuhr eingesetzt, die in Abwesenheit eines Benutzers die Aufzeichnung startet und beendet. Bei einer timergesteuerten Aufzeichnung kann es vorkommen, dass die Aufzeichnung zu früh, d. h. vor Beginn der gewünschten Sendung, startet und eventuell erst mit einem zeitlichen Abstand zum Ende der Sendung endet. In all diesen Fällen ist es erstrebenswert, eine Möglichkeit zu besitzen, die unerwünschten Filmabschnitte herauszuschneiden. Während dies beispielsweise bei analogen Videocassetten nur sehr schwer möglich ist und das Schneiden darüber hinaus mit Qualitätseinbußen verbunden ist, lassen sich in digitaler Form vorliegende Filme ohne Qualitätsverluste schneiden.

Schnittsysteme für digitale Filme sind häufig so implementiert, dass der auszuschneidende Filmabschnitt durch zwei Schnittmarkierungen gekennzeichnet wird, wobei eine erste Markierung den Anfang und eine zweite Markierung das Ende des auszuschneidenden Filmabschnitts kennzeichnet.

Digitale Aufzeichnungsgeräte, die beispielsweise eine Festplatte als Speichermedium benutzen, halten zunehmend Einzug in die Wohnzimmer der Benutzer und werden wie ein Videorecorder oder ein Satellitenreceiver in der Nähe des Fernsehgeräts aufgestellt. Solche Geräte werden über eine Fernbedienung angesteuert. Zum Setzen der Schnittmarkierung stehen einige wenige Tasten der Fernbedienung zur Verfügung, sodass das Setzen von Schnittmarkierungen verhältnismäßig mühselig ist. Üblicherweise wird ausgehend von einem Wiedergabemodus zu einem gewünschten Zeitpunkt eine Taste gedrückt, wodurch das Setzen einer Schnittmarkierung ausgelöst wird. Schwierig ist es jedoch, exakt am Anfang oder am Ende des Films eine Markierung zu setzen.

Aufgabe der Erfindung ist es, ein Verfahren zum Schneiden eines digitalen Films anzugeben, bei dem das Setzen von Schnittmarkierungen am Anfang oder Ende eines aufgezeichneten Films vereinfacht wird. Außerdem soll eine entsprechende Vorrichtung angegeben werden.

Diese Aufgabe wird bezüglich des Filmanfangs durch ein Verfahren der eingangs genannten Art gelöst, das dadurch gekennzeichnet ist, dass die erste Schnittmarkierung automatisch an den Anfang des Films gesetzt wird, wenn zuerst die zweite Schnittmarkierung gesetzt wird.

Bezüglich einer Schnittmarkierung am Ende des Films wird die Aufgabe durch ein Verfahren der eingangs genannten Art gelöst, das dadurch gekennzeichnet ist, dass die zweite Schnittmarkierung automatisch an dem Ende des Films gesetzt wird, wenn zuerst die erste Schnittmarkierung gesetzt wird.

Bezüglich der Vorrichtung wird die Aufgabe durch ein Schnittvorrichtung der eingangs genannten Art gelöst, die dadurch gekennzeichnet ist, dass die Bedieneinheit eine erste Taste zum Setzen einer ersten Schnittmarkierung und eine zweite Taste zum Setzen einer zweiten Schnittmarkierung aufweist, durch die Tasten Mittel ansteuerbar sind, die die Schnittmarkierungen für den digitalen Film setzen, wobei durch die Schnittmarkierungen ein auszuschneidender Abschnitt markierbar ist, die Mittel dazu eingerichtet sind, die Reihenfolge der Betätigung der ersten und der zweiten Taste auszuwerten, und bei Betätigung zuerst der ersten Taste die zweite Schnittmarkierung automatisch an das Ende des Films zu setzen, und bei Betätigung zuerst der zweiten Taste die erste Schnittmarkierung automatisch an den Anfang des Films zu setzen.

Bei den genannten Verfahren ist die erste Schnittmarkierung die bezüglich des Filmverlaufs zeitlich vor der zweiten Schnittmarkierung liegende Schnittmarkierung. Die erste Schnittmarkierung markiert also den Anfang des auszuschneidenden Filmabschnitts, während die zweite Schnittmarkierung dessen Ende markiert. Genauso könnte man sagen, dass die erste Schnittmarkierung das Ende eines erhaltenswerten Filmabschnitts markiert und die zweite Schnittmarkierung den Anfang eines erhaltenswerten Filmabschnitts markiert.

Durch die Ausführung des erfindungsgemäßen Verfahrens müssen in den Fällen, dass die auszuschneidenden Filmabschnitte am Anfang oder am Ende des aufgezeichneten Films liegen, nicht jeweils zwei Schnittmarkierungen von Hand gesetzt werden, sondern das Setzen einer einzigen Schnittmarkierung genügt.

Das Verfahren geht davon aus, dass die jeweils andere Schnittmarkierung automatisch am Anfang bzw. am Ende des aufgezeichneten Films gesetzt werden soll. Dieser Schritt wird automatisch ausgeführt, sodass der Benutzer von einem manuellen Setzen von Schnittmarkierungen befreit ist.

In einer vorteilhaften Ausgestaltung des Verfahrens wird die erste Schnittmarkierung durch die Betätigung einer ersten Taste und die zweite Schnittmarkierung durch die Betätigung einer zweiten Taste gesetzt. Beispielsweise durch entsprechende farbliche Markierungen ist es für einen Benutzer einfach, die richtige Taste zur Betätigung der ersten bzw. zweiten Schnittmarkierung zu finden.

Die Erfindung wird nachfolgend anhand von Ausführungsbeispielen näher erläutert. Es zeigt:
Figuren 1A bis 1D verschiedene Stadien bei Durchführung des Verfahrens zum automatischen Setzen einer Schnittmarkierung am Filmanfang,
Figuren 2A bis 2D verschiedene Stadien bei Durchführung des Verfahrens zum automatischen Setzen einer Schnittmarkierung am Filmende,
Figur 3 ein Ablaufdiagramm zur Umsetzung der Verfahrens zum automatischen Setzen von Schnittmarkierungen am Filmanfang und am Filmende,
Figur 4 eine elektronische Datenverarbeitungsvorrichtung, die zur Durchführung der erfindungsgemäßen Verfahren eingerichtet ist.

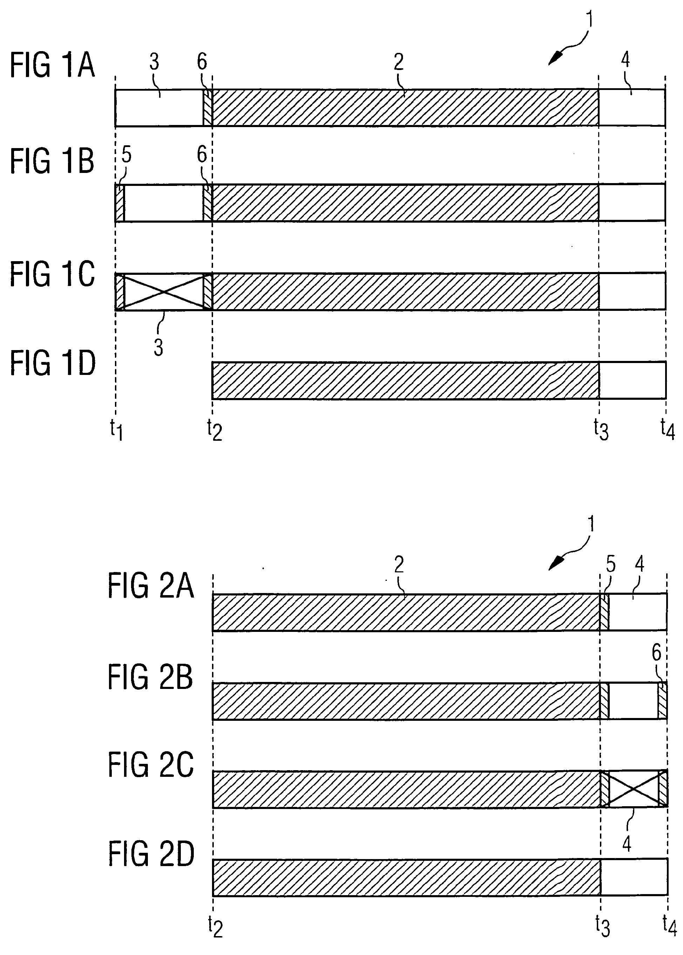

In den Figuren 1A bis 1D ist dargestellt, wie das erfindungsgemäße Verfahren zum Schneiden eines digitalen Films angewandt wird. Bei dem Digitalfilm 1 in Figur 1A soll ein mittlerer Abschnitt 2, der schraffiert dargestellt ist, erhalten bleiben, während Abschnitte 3 und 4 am Anfang bzw. Ende des Films 1 weggeschnitten werden sollen. In der Darstellung von Figur 1A wurde von einem Benutzer bereits eine zweite Schnittmarkierung 6 gesetzt, die das Ende des auszuschneidenden Filmabschnitts 3 kennzeichnet. Nach dem Setzen dieser Markierung 6 ist zunächst offen, wann der Beginn des auszuschneidenden Filmabschnitts 3 gewünscht ist. Normalerweise müsste der Benutzer nun eine erste Schnittmarkierung setzen, die den Beginn des auszuschneidenden Filmabschnitts 3 kennzeichnet.

Durch Anwendung des erfindungsgemäßen Verfahrens wird, wie in Figur 1B dargestellt ist, automatisch eine erste Schnittmarkierung 5 am Anfang des Films gesetzt. Bei diesem Automatismus wird also davon ausgegangen, dass ein auszuschneidender Filmabschnitt immer am Anfang des Films beginnt, wenn zuerst die zweite Schnittmarkierung 6 zur Kennzeichnung des Endes eines auszuschneidenden Filmabschnitts 3 gesetzt wird. Durch die erste und zweite Schnittmarkierung 5 und 6 ist festgelegt, dass der Filmabschnitt 3 am Anfang des Films 1 ausgeschnitten, d. h. gelöscht werden soll (Figur 1C). Die Figur 1D zeigt den Film, wie er nach Durchführung des erfindungsgemäßen Verfahrens vorliegt. Der Filmabschnitt zwischen den Zeitpunkten t1 und t2 wurde gelöscht, sodass zwischen den Zeitpunkten t2 und t3 der zu erhaltende Filmabschnitt 3 und zwischen den Zeitpunkten t3 und t4 ein weiterer auszuschneidender Filmabschnitt 4 liegt.

Das erfindungsgemäße Verfahren ist auch auf den Filmabschnitt 4 am Ende des Films 1 anwendbar, wie in den Figuren 2A bis 2D dargestellt ist. Von einem Benutzer wird zunächst eine erste Schnittmarkierung 5 gesetzt, die den Beginn des auszuschneidenden Filmabschnitts 4 kennzeichnet. Gemäß dem erfindungsgemäßen Verfahren wird automatisch eine zweite Schnittmarkierung 6 gesetzt, die sich am Ende des Films 1 befindet. Der somit festgelegte auszuschneidende Filmabschnitt 4 kann nachfolgend gelöscht werden (Figur 2C). Nach Durchführung des Verfahrens bleibt der Filmabschnitt 2 bestehen, sodass der Film von allen nicht-erhaltenswerten Filmabschnitten bereinigt ist. Dies erhöht einerseits die Freude am Betrachten des Films, da nicht unerwünschte Filmabschnitte mit gesehen werden müssen bzw. nicht immer mühsam vorgespult werden muss, bis der zu betrachtende Filmabschnitt 2 erreicht ist. Andererseits ist es aus technischer Sicht von großer Bedeutung, dass der Speicherplatz, der zum Speichern des Films 1 benötigt wird, möglichst gering ist. Auch aus dieser Sicht ist es deswegen erforderlich, möglichst nur diejenigen Filmabschnitte aufzuheben, die betrachtenswert sind.

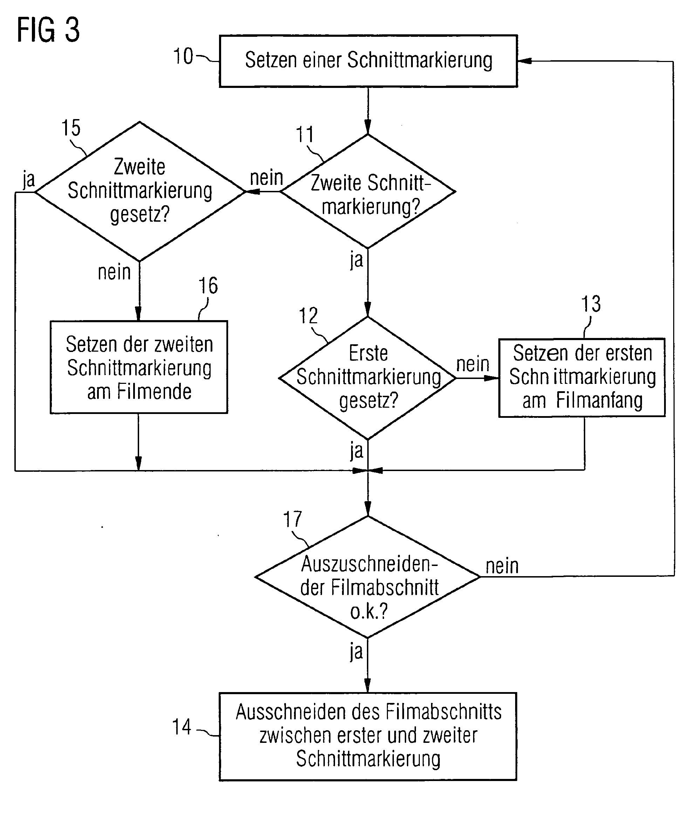

Das erfindungsgemäße Verfahren, wie es anhand der Figuren 1A bis 1D und 2A bis 2D beschrieben wurde, ist in der Figur 3 als Ablaufdiagramm dargestellt. Zunächst wird in einem Schritt 10 eine Schnittmarkierung gesetzt. Nachfolgend wird in einem Schritt 11 überprüft, ob es sich um eine zweite Schnittmarkierung handelt, die also das Ende eines auszuschneidenden Filmabschnitts markiert. Ist dies der Fall, wird nachfolgend in einem Schritt 12 geprüft, ob bereits ein erste Schnittmarkierung vorliegt. Wenn zuvor eine erste Schnittmarkierung gesetzt wurde, liegen eine erste und eine zweite Schnittmarkierung vor und der dazwischen liegende Filmabschnitt kann ausgeschnitten, z.B. aus dem gespeicherten Film gelöscht werden (Schritt 14). Wenn eine erste Schnittmarkierung zuvor nicht gesetzt wurde, so erfolgt automatisch in einem Schritt 13 das Setzen der ersten Schnittmarkierung am Filmanfang. Somit liegen wieder beide erforderlichen Schnittmarkierungen vor und der Filmabschnitt zwischen der ersten und der zweiten Schnittmarkierung kann in Schritt 14 ausgeschnitten werden.

Wenn in Schritt 11 festgestellt wird, dass es sich nicht um eine zweite Schnittmarkierung handelt, so wird zu einem Schritt 16 verzweigt. Bei der gesetzten Schnittmarkierung muss es sich um eine erste Schnittmarkierung handeln, ansonsten wäre die Prüfung in Schritt 11 positiv erfolgt. Da eine erste Schnittmarkierung also vorliegt, wird in Schritt 16 überprüft, ob eine zweite Schnittmarkierung bereits gesetzt wurde. Wurde eine zweite Schnittmarkierung früher bereits gesetzt, so kann direkt zum Ausschneiden des Filmabschnitts in Schritt 14 verzweigt werden. Sollte eine zweite Schnittmarkierung noch nicht vorliegen, so erfolgt automatisch das Setzen der zweiten Schnittmarkierung am Filmende (Schritt 15). Anschließend wird wieder Schritt 14, d. h. das Ausschneiden des Filmabschnitts, ausgeführt.

Es ist vorteilhaft, vor dem Ausschneiden des Filmabschnitts in Schritt 14 eine Überprüfung vorzunehmen, ob der auszuschneidende Filmabschnitt korrekt festgelegt wurde. Dies wird in dem Ablaufdiagramm von Figur 3 in Schritt 17 durchgeführt. Dadurch wird der Fall berücksichtigt, dass zwar beispielsweise zuerst die zweite Schnittmarkierung gesetzt wurde, die erste Schnittmarkierung aber nicht am Filmanfang liegen soll. Der Benutzer muss daher die Möglichkeit haben, die erste Schnittmarkierung selbst festzulegen.

In dem beschriebenen Fall gelangt man von Schritt 13, dem automatischen Setzen der ersten Schnittmarkierung am Filmanfang, zu Schritt 17. Der Benutzer stellt fest, dass automatisch die erste Schnittmarkierung am Filmanfang gesetzt wurde, obwohl er dies so nicht wollte. Er hat nun die Möglichkeit, im Schritt 10 eine erste Schnittmarkierung zu setzen, die von der automatisch gesetzten Markierung abweicht. Im nachfolgenden Schritt 11 wird festgestellt, dass es sich um eine erste Schnittmarkierung handelt, sodass eine Verzweigung zu Schritt 16 erfolgt. In diesem Schritt wird festgestellt, dass eine zweite Schnittmarkierung bereits gesetzt wurde, sodass wieder direkt zu Schritt 17 verzweigt wird. Der Benutzer stellt nun fest, dass der auszuschneidende Filmausschnitt korrekt markiert wurde, sodass der nachfolgende Schritt 14 ausgeführt werden kann, in dem der Filmausschnitt zwischen der ersten und der zweiten Schnittmarkierung ausgeschnitten wird.

Selbstverständlich lassen sich die Schnittmarkierungen auch so definieren, dass nicht Anfang und Ende eines auszuschneidenden Filmabschnitts festgelegt werden, sondern Anfang und Ende eines zu erhaltenden Filmabschnitts. Übertragen auf den in den Figuren 1A bis 1D und 2A bis 2D dargestellten Fall würde eine Markierung am Anfang und Ende des zu erhaltenden Filmabschnitts 2 gesetzt werden. Dadurch ergeben sich zwei auszuschneidende Filmabschnitte, einer am Anfang und einer am Ende des Films. Pro auszuschneidendem Filmabschnitt wird das erfindungsgemäße Verfahren durchgeführt. Bezüglich des auszuschneidenden Filmabschnitts 3 am Anfang des Films wurde die zweite Schnittmarkierung zuerst gesetzt, sodass ein automatisches Setzen der ersten Schnittmarkierung am Filmanfang erfolgt. Nachfolgend wird dieser Abschnitt ausgeschnitten.

Bezüglich des auszuschneidenden Abschnitts 4 am Ende des Films wurde die erste Schnittmarkierung zuerst gesetzt. Gemäß dem erfindungsgemäßen Verfahren wird automatisch die zweite Schnittmarkierung am Filmende gesetzt, sodass der hierdurch gekennzeichnete Filmabschnitt ausgeschnitten werden kann.

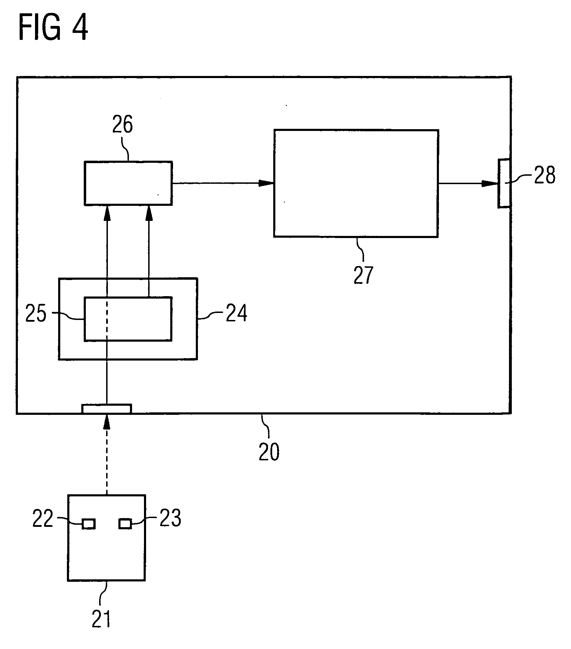

Die Figur 4 zeigt eine Datenverarbeitungsvorrichtung, die zur Durchführung des erfindungsgemäßen Verfahrens eingerichtet ist. Die Datenverarbeitungsvorrichtung 20 umfasst eine Fernbedienung 21, durch die verschiedene Funktionen gesteuert werden können. Unter anderem weist die Fernbedienung 21 zwei Tasten 22 und 23 auf, wobei die Taste 22 zum Setzen einer ersten Schnittmarkierung und die Taste 23 zum Setzen einer zweiten Schnittmarkierung vorgesehen ist. Eine Steuereinheit 24 der Datenverarbeitungsvorrichtung 20 überwacht die von der Fernbedienung 21 eingehenden Steuerbefehle. Der eingegangene Steuerbefehl wird dabei zu einem Speicher 25 weitergeleitet, in dem die Position der jeweiligen Schnittmarkierung gespeichert wird. Handelt es sich bei den eingehenden Steuersignalen um das Setzen einer ersten oder zweiten Schnittmarkierung, so überprüfen Mittel 26 zur Durchführung des erfindungsgemäßen Verfahrens, ob ein automatisches Setzen von Schnittmarkierungen erfolgen muss. Tritt einer der zuvor beschriebenen Fälle auf, in denen eine weitere Schnittmarkierung automatisch gesetzt werden kann, so wird deren Position durch die Mittel 26 bestimmt und ebenfalls in den Speicher 25 abgelegt. Gegebenenfalls werden durch die Steuereinheit 24 Filmabschnitte eines digitalen Films, der ebenfalls in dem Speicher 25 abgelegt ist, gelöscht. Statt in dem Speicher 25 könnten die Schnittmarkierungen an einer anderen Stelle, beispielsweise in einem Register eines Prozessors der Datenverarbeitungsvorrichtung, die als Schnittvorrichtung eingerichtet ist, abgelegt werden. Das Ablegen kann in Form von Zeitcodierungen erfolgen, wobei sich die Zeitcodierungen auf den gespeicherten Film beziehen. Auch könnten die Schnittmarkierungen als Speicheradressen abgelegt werden, wobei die Speicheradressen angeben, an welcher Stelle des Speichers 25 die gewünschte Filmposition liegt.

Mit dem Speicher 25 ist eine Wiedergabeeinheit 27 verbunden, durch die in dem Speicher 25 abgelegte Filme wiedergegeben werden können. Dazu ist die Wiedergabeeinheit 27 mit einer Schnittstelle 28 verbunden, an die ein Anzeigegerät, beispielsweise ein Fernseher oder ein Computermonitor, angeschlossen werden können.

### Bezugszeichenliste

- 1: digitaler Film
- 2: zu erhaltender Filmabschnitt
- 3, 4: auszuschneidende Filmabschnitte
- 6: zweite Schnittmarkierung
- 5: erste Schnittmarkierung
- 10...17: Verfahrensschritte
- 20: Datenverarbeitungsvorrichtung
- 21: Fernbedienung
- 22, 23: Tasten
- 24: Steuereinheit
- 26: Mittel zur Durchführung des erfindungsgemäßen Verfahrens
- 25: Speicher
- 27: Wiedergabeeinheit
- 28: Schnittstelle
- t1, t2, t3, t4: Zeitpunkte

## Patentansprüche

1. Verfahren zum Schneiden eines digitalen Films (1) unter Verwendung einer elektronischen Datenverarbeitungsvorrichtung (20) mit den Schritten:
- Setzen einer ersten Schnittmarkierung (5) zur Kennzeichnung des Beginns eines auszuschneidenden Filmabschnitts (3, 4),
- Setzen einer zweiten Schnittmarkierung (6) zur Kennzeichnung des Endes eines auszuschneidenden Filmabschnitts (3, 4) und
- Ausschneiden des Filmabschnitts zwischen der ersten und der zweiten Schnittmarkierung (5, 6),
**dadurch gekennzeichnet, dass**
die erste Schnittmarkierung (5) automatisch an dem Anfang des Films (1) gesetzt wird, wenn zuerst die zweite Schnittmarkierung (6) gesetzt wird.

2. Verfahren zum Schneiden eines digitalen Films (1) unter Verwendung einer elektronischen Datenverarbeitungsvorrichtung (20) mit den Schritten:
- Setzen einer ersten Schnittmarkierung (5),
- Setzen einer zweiten Schnittmarkierung (6) und
- Ausschneiden des Filmabschnitts zwischen der ersten und der zweiten Schnittmarkierung (5, 6),
**dadurch gekennzeichnet, dass**
die zweite Schnittmarkierung (6) automatisch an dem Ende des Films (1) gesetzt wird, wenn zuerst die erste Schnittmarkierung (5) gesetzt wird.

3. Verfahren nach Anspruch 1 oder 2,
**dadurch gekennzeichnet**, der Schritt des Ausschneidens des Filmabschnitts zwischen der ersten und der zweiten Schnittmarkierung (5, 6) beinhaltet, dass zunächst der Benutzer aufgefordert wird, ein Ausschneiden des durch die erste und die zweite Schnittmarkierung festgelegten Abschnitts zu bestätigen, und anschließen bei positiver Bestätigung das Ausschneiden durchgeführt wird.

4. Verfahren zum Schneiden eines digitalen Films (1) nach Anspruch 1 oder nach Anspruch 3, rückbezogen auf Anspruch 1,
**dadurch gekennzeichnet, dass** die zweite Schnittmarkierung (6) automatisch an dem Ende des Films (1) gesetzt wird, wenn zuerst die erste Schnittmarkierung (5) gesetzt wird.

5. Verfahren nach einem der Ansprüche 1 bis 4,
**dadurch gekennzeichnet, dass** die erste Schnittmarkierung (5) durch Betätigung einer ersten Taste (22) und die zweite Schnittmarkierung (6) durch Betätigung einer zweiten Taste (23) gesetzt wird.

6. Schnittvorrichtung mit
- einem Speicher (25), in dem ein digitaler Film speicherbar ist,
- einer Wiedergabeeinheit (27) zur Wiedergabe eines in dem Speicher (25) abgelegten Films,
- einer Bedieneinheit (21) zur Eingabe von Steuerbefehlen für die Schnittvorrichtung,
- einer Steuereinheit (24) zur Entgegennahme von Steuerbefehlen von der Bedieneinheit (21),
**dadurch gekennzeichnet, dass**
- die Bedieneinheit (21) eine erste Taste (22) zum Setzen einer ersten Schnittmarkierung und eine zweite Taste (23) zum Setzen einer zweiten Schnittmarkierung aufweist,
- durch die Tasten (22, 23) Mittel (24, 25, 26) ansteuerbar sind, die die Schnittmarkierungen für den digitalen Film setzen, wobei durch die Schnittmarkierungen ein auszuschneidender Abschnitt markierbar ist,
- die Mittel (24, 25, 26) dazu eingerichtet sind, die Reihenfolge der Betätigung der ersten und der zweiten Taste (22, 23) auszuwerten, und
- bei Betätigung zuerst der ersten Taste (22) die zweite Schnittmarkierung (6) automatisch an das Ende des Films (1) zu setzen, und
- bei Betätigung zuerst der zweiten Taste (23) die erste Schnittmarkierung (6) automatisch an den Anfang des Films (1) zu setzen.

7. Schnittvorrichtung nach Anspruch 6,
**dadurch gekennzeichnet, dass** die Schnittmarkierungen ebenfalls in dem Speicher (25) abgelegt werden.

8. Schnittvorrichtung nach Anspruch 7,
**dadurch gekennzeichnet, dass** eine Schnittstelle (28) vorgesehen ist zum Anschluss eines Anzeigegeräts.
